# EUROPEAN PATENT APPLICATION

(11) **EP 4 466 997 A1**
(43) Date of publication of application: **27.11.2024**
(21) Application number: 23382484.6
(22) Date of filing: 24.05.2023
(51) Int. Cl.: A01N 59/06, A01P 3/00, A01N 59/16

(54) **METHOD FOR CONTROLLING PHYTOPHTHORIA**

(71) Applicant: Sanchez Alvarez, Carlos Antonio, 21710 Bollullospar del Condado (Huelva) (ES)
(72) Inventor: Sanchez Alvarez, Carlos Antonio, 21710 Bollullospar del Condado (Huelva) (ES)
(74) Representative: Herrero & Asociados, S.L.

(57) **Abstract**

The present invention refers to a method for controlling diseases related to the genus *Phytophthora.*

## Description

The present invention refers to a method for controlling diseases related to the genus *Phytophthora.*

### Background of the invention

Despite the advances made in relation to plant diseases, the damage caused by phytopathogens is still very relevant. Among the root and neck rots of various crops, it is worth highlighting those of the genus *Phytophthora.*

The genus *Phytophthora,* formerly included in the group of true fungi, is now classified in the kingdom Chromista. These microorganisms, although they have a growth pattern similar to that of fungi, differ from them for having a cell wall composed essentially of cellulose and β-glucans, instead of chitin; for being diploid organisms in their vegetative phase; for having zoospores with two flagella of unequal length, which gives them mobility; and for not synthesizing sterols, which forces them to have an exogenous source for their sporulation.

The Phytophthora has been treated with salts; for example, patent EP1471787B2 describes a composition of copper salts and their use to control phytopathogenic fungi. The mixtures described are made of copper (II) hydroxide with at least one other salt of formula 3Cu(OH)₂X(Y)ₙ wherein X is Cu(ll) or Ca(II), Y is chloride or sulfate and n is 1 or 2. A mixture of salts for the control of phytopathogenic fungi is then described in this patent where the compound salt comprises copper hydroxide and optionally calcium sulfate.

New developments are needed to improve the application of calcium sulfate and to make it more effective than it is today.

### Description of the invention

The method of the invention controls the growth of the *Phytophthora* pathogen in cultures. *Phytophthora* can attack both fruit and vegetable species. In crops attacked by *Phytophthora,* wilting and brown spots are observed on leaves. In fruit plantations, *Phytophthora* occurs mainly at the foot of the trees. These pathogens are found in the soil in the form of oospore survival structures. When the soil is saturated with water (waterlogging) and the temperature is not low (10 to 35°C), the oospores germinate, producing sporangia that emit mobile zoospores. The latter are capable of swimming in the soil water and are chemically attracted by the exudates of the roots in which they establish the infection. After infection, cortical necrosis of the roots develops, giving rise to an increase in the population of the pathogen, which develops rapidly in successive infection cycles, producing new sporangia and a multitude of infective zoospores under soil water saturation conditions.

Under controlled conditions, the factor that most influences the severity of the infections is the duration of the period of soil waterlogging. Given the nature and life cycle of the pathogens, the most effective strategies for their control will be those that reduce the rate of increase of the disease in this waterlogging. It is necessary to apply measures in the place where water is, which is where the *Phytophthora* develops.

In the present invention, it has been unexpectedly discovered that a residue from the process for obtaining titanium dioxide, which contains calcium sulfate with a very high solubility in water, is very effective for the control of *Phytophthora,* which, as has been said develops in the waterlogging of soil.

In the present description the term *"Phytophthora"* refers to all species of the genus *Phytophthora.*

In the present invention, a method for controlling Phytophthora spp. is described by applying a waste categorized as waste with the LER code (European Waste List) 061101, Decision 2014/955/UE; this is calcium reaction waste from the production of titanium dioxide, also named in the present invention as red gypsum from the production of titanium dioxide.

In the process of obtaining titanium dioxide, a process of separation by precipitation of TiO₂ generates a series of effluents, or acid flows, wherein filtration and washing of the pulp of titanium dioxide is performed to eliminate the acid residues. Next, the stage of calcination begins, the purpose of which is to eliminate hydration present in the titanium dioxide, conditioning the product by grinding, coating and micronizing. From the supernatant of the precipitation of titanium dioxide, a strong acid solution is obtained, rich in dissolved metal sulphates. This solution is treated to firstly obtain iron sulfate heptahydrate FeSO₄ 7H₂O, commercially known as caparrose (CAP), by crystallization. Subsequently, the remaining solution is concentrated, precipitating the iron sulfate monohydrate FeSO₄ 1 H₂O. Finally, a sulfuric acid is left that is recycled in the process.

From the final washing of the TiO₂ pulp, an acid flow is obtained, whose acidity and metals present are neutralized with lime, giving rise to the formation of calcium reaction residues from the production of titanium dioxide, also called red gypsum, and a resulting liquid.

Until now, these calcium reaction residues from the production of titanium dioxide or red gypsum generated in the process for obtaining TiO₂ have been sent to landfills. Then another advantage of this method is to value these residues as stated by law.

Most of the composition of the calcium reaction waste from the production of titanium dioxide is as follows: SO₃, CaO and Fe₂O₃, the latter providing its characteristic red color thereto. Calcium reaction residues from the production of titanium dioxide have a higher solubility than carbonates obtained via milling of mineral deposits. The product, apart from calcium sulfate, contains in its composition iron and magnesium contents in amounts ranging from 1% to 20% by weight, with respect to the total weight, which confer better properties, apart from greater solubility in calcium, these macro and micronutrients that help the recovery of plants are provided.

Therefore, the first aspect of the invention refers to a method for controlling and preventing the pathogen of the genus Phytophthora in crops, which comprises the steps of applying an effective amount of calcium reaction residues from the production of titanium dioxide to the crop to be protected or the area adjacent thereto, the soil that supports the crop, the root of the plant, its leaves or the seed to produce the crop.

In the present invention, the term "crop" refers to the horticultural plant that is cultivated either fruits or vegetables.

The solubility of "calcium reaction residues from titanium dioxide production" compared to the solubility of calcium sulfate or calcium carbonate of the type of ground quarry stone being currently used in both water and ammonium acetate is much higher than that of calcium sulfate or calcium carbonate from quarry. This increase in the availability of calcium helps the creation of new absorbing roots, stopping the reproductive stages of the fungus in the formation of sporangia and helps the growth and fruiting of crops. The difference between both processes is that since it is highly mineralized calcium rock, solubility is very low, which is why it has less solubility than the chemical synthesis route, which gives rise to much more soluble products due to its molecular bonds.

Other aspects of the invention are the use of the calcium reaction residues from the production of titanium dioxide for the control of the pathogen of the genus *Phytophthora* in crops and a composition for the control of the genus *Phytophthora* that comprises the calcium reaction residues from the production of titanium dioxide and a phytologically acceptable additive.

### Description of a preferred embodiment

As it has been said, the first aspect of the invention refers to a method for controlling and preventing the pathogen of the genus *Phytophthora* in crops, which comprises the steps of applying an effective amount of calcium reaction residues from the production of titanium dioxide to the crop to be protected or to the area adjacent to the crop, to the soil that supports the crop, to the root thereof, to the leaves of the crop or to the seed to produce the crop and the second aspect, the use of calcium reaction residues from the production of titanium dioxide for the control of the pathogen of the genus *Phytophthora* in crops. In addition, the last aspect is a composition for the control of the genus *Phytophthora* that includes the red gypsum from obtaining titanium dioxide, which is also a phytologically acceptable carrier material.

The Phytophthora species that are controlled may include any of the species: *Phytophthora alni, Phytophthora boehmeriae, Phytophthora botryose, Phytophthora ibrassicae, Phytophthora cactorum, Phytophthora cajani, Phytophthora cambivora, Phytophthora capsici, Phytophthora cinnamomi, Phytophthora citricola, Phytophthora citrophthora, Phytophthora clandestine, Phytophthora colocasiae, Phytophthora cryptogea, Phytophthora drechsleri, Phytophthora diwan ackerman, Phytophthora erythroseptica, Phytophthora fragariae, Phytophthora fragariae var. rubi, Phytophthora Gemini, Phytophthora glovera, Phytophthora gonapodyides, Phytophthora heveae, Phytophthora hibernalis, Phytophthora humicola, Phytophthora hydropathical, Phytophthora irrigate, Phytophthora idaei, Phytophthora ilicis, Phytophthora infestans, Phytophthora inflate, Phytophthora ipomoeae, Phytophthora iranica, Phytophthora katsurae, Phytophthora kernoviae, Phytophthora lateralis, Phytophthora medicaginis, Phytophthora megakarya, Phytophthora megasperma, Phytophthora melonis, Phytophthora mirabilis, Phytophthora multivesiculata, Phytophthora nemorosa, Phytophthora nicotianae, Phytophthora PaniaKara, Phytophthora palmivora, Phytophthora phaseoli, Phytophthora pini, Phytophthora porri, Phytophthora plurivora, Phytophthora primulae, Phytophthora pseudosyringae, Phytophthora pseudotsugae, Phytophthora quercina, Phytophthora ramorum, Phytophthora sinensis, Phytophthora sojae, Phytophthora syringae, Phytophthora tentaculata, Phytophthora trifolii* or *Phytophthora vignae, Phytophthora taxon Agathis.*

In particular, it refers to the species *Phytophthora cinnamomi.*

Crops are preferably selected from among avocados, almonds, citrus, olives, wild olives, *Quercus suber* and *Quercus ilex* and also legumes. Particularly legumes, *Quercus suber* and *Quercus ilex.*

Preferably in the first aspect, the effective amount is applied to the soil that supports the crop.

Preferably the composition comprises calcium sulphate, iron sulphate monohydrate, iron sulphate heptahydrate and magnesium salts. More preferably, they comprise calcium sulphate, iron sulphate monohydrate, iron sulphate heptahydrate and magnesium salts, ranging from 1% to 20% by weight with respect to the total weight of the composition.

Preferably the pH of the composition is between 5 and 6.

### EXAMPLES

### Example 1

Gypsum is a natural calcium sulfate dihydrate mineral, chemically represented as CaSO₄.2H₂O. This mineral dissolves in water and is deposited below the earth's surface as a rock. Therefore, the gypsum has to be extracted through mining to be used as a soil conditioner, fertilizer or amendment, among other commercial uses. The solubility of calcium in ammonium acetate and in water was measured by inductively coupled plasma atomic emission spectroscopy. It was also measured and compared with calcium reaction residues originating from the production of titanium dioxide.

**Table 1. Measurement of dissolved Ca in samples**

| **Shows calcium reaction residues from the production of titanium dioxide** | Result (mg/kg) |
|---|---|
| Available calcium (Ext. AcNH4) | 19504 |
| Soluble calcium (Ext. water) | 4561 |

| **Natural mineral sample** | Result (mg/kg) |
|---|---|
| Available calcium (Ext. AcNH4) | 3336 |
| Soluble calcium (Ext. water | 292 |

As it can be seen, the solubility in water and ammonium acetate is much higher in the product of the invention compared to the natural mineral product. This increase in the availability of calcium helps the creation of new absorbent roots, stops the reproductive stages of the pathogen in the formation of sporangia and helps the growth and fruiting of pastures that helps livestock and helps the growth of legumes that need concentrations of superior calcium to grow and are specialist plants in fixing nitrogen and restoring nitrogen to the soil. This is fundamental especially in the current destruction of the Mediterranean forest; before the dryness of the holm oak, affecting yields in cork, acorns and pastures, which in turn affects the native flora and biodiversity. What is demonstrated in the example contributes to the development of fauna, for example: density of the rabbit population that affects the feeding of lynxes, deer and the Iberian pig, wherein without acorns there would be no fattening season. All this entails a series of socioeconomic factors that affect rural depopulation.

### Example 2

The product of the invention has been tested for the control of *Phytophthora cinnamomi.* Significant differences are observed in the tested cultures for the control of the pathogen.

## Claims

1. A method for the control and prevention of the pathogen of the genus Phytophthora in crops, which comprises the step of applying an effective amount of calcium reaction residues from the production of titanium dioxide to the crop to be protected or to the area adjacent to the crop, to the ground supporting that of the crop, to the root of the crop, to the leaves of the crop, or to the seed to produce the crop.

2. The control and prevention method according to claim 1, **characterized in that** the pathogen is of the species *Phytophthora cinnamomi.*

3. The method according to any of claims 1 or 2, **characterized in that** the crops are selected from: avocados, almonds, citrus, olives, wild olives, Quercus suber and Quercus ilex and legumes.

4. The use of calcium reaction residues from the production of titanium dioxide for the control of the pathogen of the genus *Phytophthora* in crops.

5. The use according to claim 4 **characterized in that** the pathogen is of the species *Phytophthora cinnamomi.*

6. The use according to any of claims 4 or 5, **characterized in that** the crops are selected from among: avocados, almonds, citrus, olives, wild olives, Quercus suber and Quercus ilex and legumes.

7. A composition for the control of the genus *Phytophthora,* **characterized in that** it comprises calcium reaction residues from the production of titanium dioxide, which is also a phytologically acceptable carrier material.

8. The composition according to claim 7, is **characterized in that** it comprises calcium sulfate, iron sulfate monohydrate, iron sulfate heptahydrate, and magnesium salts.

9. The composition according to claim 8 is **characterized in that** it comprises calcium sulfate, iron sulfate monohydrate, iron sulfate heptahydrate and magnesium salts, ranging from 1 % to 20% by weight with respect to the total weight of the composition.
